# EUROPEAN PATENT SPECIFICATION

(11) **EP 4 563 309 B1**
(45) Date of publication and mention of the grant of the patent: **11.11.2026**
(21) Application number: 24215161.1
(22) Date of filing: 25.11.2024
(51) Int. Cl.: B27D 5/00, B29C 63/00, B29C 63/02

(54) **GUIDE SYSTEM AND EDGE BANDING MACHINE**
FÜHRUNGSSYSTEM UND KANTENANLEIMMASCHINE
SYSTÈME DE GUIDAGE ET MACHINE DE CERCLAGE DE BORD

(30) Priority: 30.11.2023 IT 202300025539
(43) Date of publication of application: 04.06.2025
(73) Proprietor: SCM Group S.p.A., 47921 Rimini (RN) (IT)
(72) Inventor: PREGRASSO, Matteo, 47921 Rimini (RN) (IT)
(74) Representative: Gallo, Gianluca

(56) References cited:
- DE-A1- 102022 110 163

## Description

This invention relates to a guide system for guiding a strip, in particular in proximity to a glue roller forming part of a gluing unit of an edge banding machine.

This invention relates to an edge banding machine for gluing a strip to a panel, in particular, a panel made of wood or comparable materials, such as, for example, wood by-products, metal, plastic and composites.

As is well known, edge banding machines (also called edging machines, or simply edge banders) are designed to create an aesthetically pleasing surface finish on a "rough edge" of a panel. By "rough edge" is meant an edge of a panel, made typically of particleboard material, covered by two sheets, one above and one below, of ennobling material, which, after being cut to size, for example by panel sawing or nesting processes, have one or more rough edges, where the inner core of particleboard material is visible. In the edge banding machine, a strip or band is glued to the rough edge of the panel to cover it. Gluing is performed by a gluing unit (also called gluing station or simply glue unit). Each single panel may run through an edge banding machine, i.e. through the gluing unit thereof, one or more times or it may run through several edge banding machines located, for example, one after another in order to cover all the rough edges of a single panel. The strip is applied so it projects outwards, since it is larger in area than the rough edge it is intended to cover so that it is sure to cover the rough edge entirely.

Thus, to obtain an aesthetically pleasing surface finish even on the rough edge, therefore, a further finishing process must be performed on the projecting parts of the strip so that the strip is exactly the same size as the rough edge of the panel. This process on the edge strip is carried out by one or more finishing stations (also called machining stations or machining units) following the gluing station. These finishing stations may, for example, comprise two or more substations (or sub-units), each responsible for carrying out a specific machining process on the edge strip.

Known in the prior art are gluing units comprising a gluing roller configured to be dipped into a tank containing glue in the molten state so that a layer of glue of predetermined thickness is transferred onto the roller. The gluing unit is configured to spread this glue on the edge strip and/or on the rough edge to be covered. The choice as to whether to apply the glue directly on the edge strip or on the rough edge depends on the type of edge strip to be applied, in particular on the thickness of the strip or on the material it is made of, or on the profile of the rough edge. For example, in the case of an edge strip made of solid wood, the glue is typically applied on the rough edge of the panel and, in some cases, also on the edge strip itself. In the case of what is known as "soft-forming edging", that is to say, when the rough edge has a contoured profile, the glue is typically applied on the strip because it is difficult to apply the glue on a surface that is not flat. Also in the case of an edge strip made of plastic material, the glue is typically applied on the edge strip. Typically, therefore, the glue roller is movable between a position proximal to the rough edge to be covered and a position distal to the rough edge and proximal to the strip feed zone.

In order to guide the strip in proximity to the glue roller, the gluing units of the prior art are provided with a guide. When the glue is applied to the panel, the strip is made to slide in proximity to the gluing unit in a guide known as a "bypass". Besides guiding the strip as the strip is fed forward, the bypass guide covers it when it is in the proximity of the glue roller so that the glue from the roller does not smudge the strip.

On the contrary, when the glue is applied to the strip, the strip is made to slide at a predefined distance from the glue roller so that the inside, nonaesthetic face of the strip, called "back of the strip", comes into contact with the glue covering the outside surface of the glue roller. That way, a predefined quantity of glue is applied to that face of the strip. Under the action of a presser device, the other face, known as the "aesthetic face" is pressed onto the rough edge of the panel to be covered. Adjusting the quantity of glue is carried out by adjusting the device on the glue tank, known as "doser". Depending on the type of strip on which to apply the glue, in particular, depending on its thickness, different guides are used, i.e. guides with different shapes, features or functions, so as to guide the strip in such a way that it moves at a predefined distance from the glue roller. For example, for thin strips, less than 1 mm thick, the guide may be in the form of a plate, known as "comb", reduced in thickness, made of harmonic steel and having the shape of a comb. The comb is positioned in such a way that its main face is parallel to the face of the strip on which the glue is to be applied. The elasticity offered by this type of guide is enough to correctly guide thin strips. For thick strips, more than 1 mm thick, the guide may be in the form of a pressure roller positioned parallel to the glue roller, i.e. a roller whose longitudinal axis is parallel to, and not coincident with, the longitudinal axis of the glue roller. The pressure roller is left idle, i.e., free to rotate about it longitudinal axis. Typically, the axis of the glue roller, and thus also that of the pressure roller, are disposed vertically, that is to say, they are perpendicular to the surface that supports the panels inside the edge bander.

It is evident that the type of guide (bypass guide, comb or pressure roller) needs to be changed every time, for example, the type of strip to be applied and/or the desired edge finish, changes.

Known in the prior art are edge banding machines where an operator is responsible for changing the type of guide whenever the type of strip to be applied and/or the desired edge finish needs to be changed. The operator also has the task of adjusting the guide the gluing unit is equipped with in each case.

It is evident, however, that these operations carried out manually by the operator make the edge banding machine extremely inefficient. Moreover, these manual operations are subject to human error. For example, the operator might forget to change the type of guide or mistakenly fit the wrong guide for a certain type of strip. Prior art can be found in DE 10 2022 110163 A which discloses the preamble of claim 1.

This invention has for an aim to provide a guide system and an edge banding machine to overcome the above mentioned disadvantages of the prior art.

In particular, the aim of this invention is to provide a guide system and an edge banding machine which allow changing the type of gluing system in a flexible, safe, error-free and economical manner.

This aim is fully achieved by the guide system and the edge banding machine as characterized in the appended claims.

This invention provides a guide system for guiding a strip in proximity to a glue roller configured to spread glue on the strip or on a panel.

In particular, the guide system is configured for guiding the strip in proximity to a glue roller forming part of a gluing unit of an edge banding machine. The glue roller of the gluing unit may be configured, for example, to spread glue on the strip or on the panel. In particular, the glue roller may obtain the glue in the molten state from a tank, so that a layer of glue is spread on its outside surface. The glue roller may be positioned so that its longitudinal axis is substantially vertical, that is, perpendicular to a support plane which supports the panel inside the edge banding machine. The glue roller may, for example, be partly dipped in the molten glue tank. Thanks to the adhesiveness of the glue and the knurling on the glue application roller, the glue rises along the outside surface of the glue roller, forming the layer of glue which is then applied on the strip or on the panel. Advantageously, the guide system may comprise a plurality of guides. In particular, the guide system may comprise a plurality of guides which are all different, each guide of the plurality being optimized to guide a type of strip or to perform a certain function. Furthermore, the plurality of guides may be movable between a start position, where a first guide of the plurality of guides is configured to be positioned in proximity to the glue roller so as to guide the strip in proximity to the glue roller, and an end position, where a second guide of the plurality of guides is positioned in proximity to the glue roller so as to guide the strip in proximity to the glue roller. In an example, when the strip is guided in proximity to the glue roller, in particular at a certain distance from the glue roller, the strip can come into contact with the layer of glue present around the outside surface of the glue roller. Thus, a quantity of glue can be applied to the strip. In another example, a particular guide of the guide system can guide the strip in proximity to the glue roller while preventing it from coming into contact with the layer of glue present around the outside surface of the glue roller. It is evident that the final effect obtained by guiding the strip in proximity to the glue roller depends also on the shape of the guide itself and/or on the function it was designed for.

The gluing unit comprises a circular support. The circular support may be substantially disc-shaped. It is understood, however, that the circular support may also have other shapes, while remaining within the scope of protection afforded by the claims appended hereto. The circular support has a first circular face and a second circular face, opposite the first circular face. Additionally, the circular support may be rotatable about a rotation axis perpendicular to the first circular face. More specifically, the rotation axis may, for example, be parallel to the longitudinal axis of the glue roller. Advantageously, the rotation axis passes through the centre of the first circular face. The plurality of guides are coupled to the circular support, for example, to the first circular support. In particular, each guide of the plurality of guides may advantageously be positioned round the circumference of the first circular face. That way, the guides of the plurality of guides are equidistant from the centre of the first circularface and may also be equidistant from the rotation axis. Thus, the guide system is particularly compact. That way, the guide system passes from the start position to the end position, and vice versa, thanks to the rotation of the circular support about the rotation axis. Additionally, each guide of the plurality of guides is coupled, for example removably, to the first circular face. That means the guides present on the plurality of guides of the guide system can be replaced with others having different shapes and/or functions, thus making the gluing unit particularly flexible.

More advantageously, the guide system may comprise a first actuator, configured to rotate the circular support about the rotation axis. The first actuator may comprise a first motion transmission system configured to transmit the motion of the first actuator to the circular support. For example, the first actuator may be an electric motor, a servomotor, an electric servomotor or a stepping motor. In these cases, the first motion transmission system may, for example, comprise a drive shaft and, if necessary, a reduction gear unit to control the ratio between the rotation speed and the delivered torque. Furthermore, the first actuator may, for example, be a linear electric motor or a pneumatic actuator such as, for example, a piston. In these cases, the first motion transmission system may, for example, comprise a crank lever system to convert the linear motion of the first actuator into rotational motion. The circular support may be coupled to the first motion transmission system removably, for example. That way, it may be easy to replace the plurality of guides en bloc or it may be easier to clean the guides of the plurality of guides. The coupling between the first motion transmission system and the circular support may be a shape coupling. Advantageously, the shape coupling may be configured to allow creating a finite plurality of radial orientations, in particular, two radial orientations, and more specifically, a single radial orientation, between the circular support and the first motion transmission system. That way, the operator is guided when coupling the first transmission system to the first circular support, thus ensuring that the two elements remain correctly oriented radially.

Advantageously, the first motion transmission system may not allow retrograde motion. Thus, it is not necessary to keep the first actuator in an engaged condition or to block the first transmission system, for example using a brake, to ensure that the circular support remains in the desired position.

More advantageously, the guide system may comprise a main support. The circular support may be coupled to the main support rotatably about the rotation axis. In particular, the second circular face may be in contact with the main support in a contact zone. For example, the second circular face may slide on the main support, in particular on the contact zone, as the circular support rotates about the rotation axis. In this case, advantageously, the main support and/or the second circular face may have a low friction coefficient, at least in the contact zone, so as to reduce wear and/or make the circular support rotate more smoothly on the main support. In particular, the main support and/or the second circular face may, for example, be made of a low-friction material or have a surface treatment that makes them low-friction surfaces, at least in the contact zone.

Advantageously, the main support may comprise a main stop, while the circular support may comprise a first adjustable stop configured to interfere with the main stop when the plurality of guides is at the start position. That way, the start position can be defined precisely and, in particular, adjustably. In order to be adjustable, the position of the first adjustable stop relative to the main stop may be variable. In another example, the main stop might be adjustable, i.e. the position of the main stop relative to the main support might be variable, thus effectively obtaining the same advantage.

Advantageously, the circular support may comprise a second adjustable stop configured to interfere with the main stop when the guide system is at the end position. That way, the end position can be defined precisely and, in particular, adjustably. In order to be adjustable, the position of the second adjustable stop relative to the circular stop may be variable. In this example too, the main stop might be adjustable, i.e. the position of the main stop relative to the main support might be variable,, thus effectively obtaining the same advantage.

Furthermore, the guide system may comprise a secondary support, configured to be coupled to an edge banding machine. The main support may be movable along a transverse axis relative to the secondary support, towards and away from the glue roller. In particular, the transverse axis may be perpendicular to the rotation axis and/or to the longitudinal axis of the glue roller. Furthermore, the transverse axis may be parallel to the panel support plane. Additionally, the transverse axis may be perpendicular or inclined to the panel feed direction. The guide system may comprise a second actuator for moving the main support automatically along the transverse axis relative to the secondary support. The second actuator may comprise a second motion transmission system. For example, the second actuator may be an electric motor, a servomotor, an electric servomotor or a stepping motor. In these cases, the second motion transmission system may, for example, comprise a lead screw and nut system or a rack and pinion system to convert the rotational motion of the second actuator into linear motion. Furthermore, the second actuator may, for example, be a linear electric motor or a pneumatic actuator such as, for example, a piston.

Advantageously, the guide system may be movable between the start position, where the first guide of the plurality of guides may be configured to be positioned in proximity to the glue roller so as to guide the strip in proximity to the glue roller, an intermediate position, where a third guide of the plurality of guides may be configured to be positioned in proximity to the glue roller so as to guide the strip in proximity to the glue roller, and an end position, where the second guide of the plurality of guides may be configured to be positioned in proximity to the glue roller so as to guide the strip in proximity to the glue roller.

This disclosure provides an edge banding machine for gluing a strip to a panel.

Advantageously, the edge banding machine which may comprise a support plane for supporting the panel, a movement system for moving the panel along a feed direction which is parallel to the support plane, a gluing unit for gluing the strip onto an edge of the panel, and a plurality of machining units, located downstream of the gluing unit, to perform a plurality of machining processes on the panel and/or on the strip glued to the panel. In particular, the gluing unit may comprise a glue roller to spread a glue on the strip or on the panel, and a guide system as described above, to guide the strip in proximity to the glue roller.

This and other features will become more apparent from the following description of a preferred embodiment, illustrated purely by way of non-limiting example in the accompanying drawings, in which:
- Figure 1 shows a perspective view of detail of an edge banding machine according to the invention;
- Figure 2 shows a perspective view of a detail of the guide system according to the invention, in a first configuration;
- Figure 3 shows a perspective view of a detail of the guide system according to the invention, in a second configuration;
- Figure 4 shows a perspective view of a detail of the guide system according to the invention, in a third configuration;
- Figure 5 shows a perspective view of the guide system according to the invention; and
- Figure 6 shows a partially exploded, perspective view of the guide system according to the invention.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

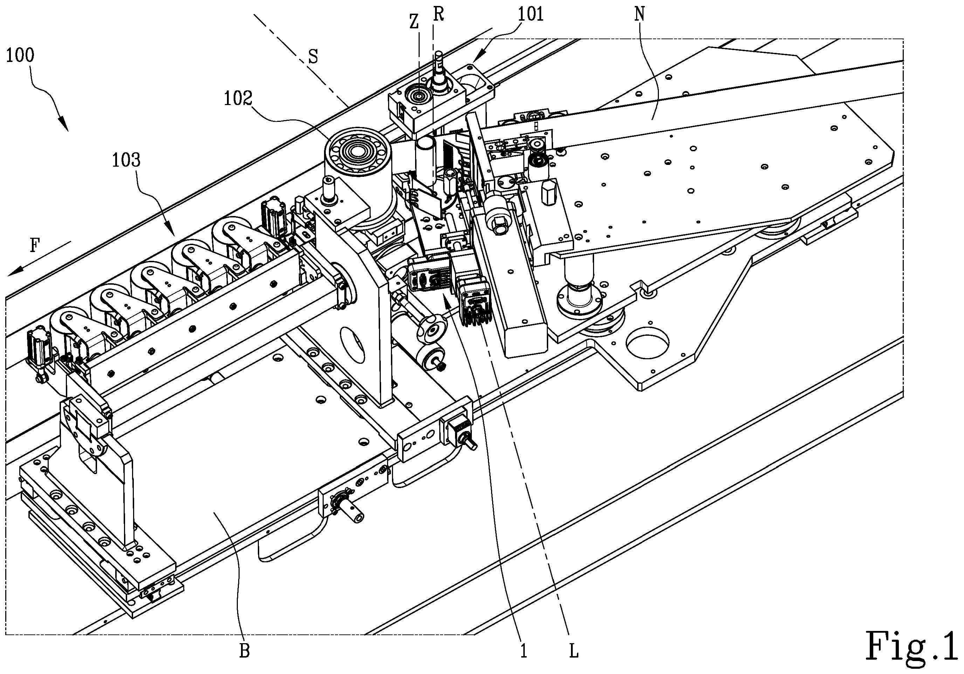

Figure 1 shows an edge banding machine according to the invention, configured for gluing a strip N to a panel to create an aesthetically pleasing surface finish, in particular on a rough edge of the panel. The edge banding machine may comprise a support plane S for supporting the panel, and a movement system (not shown in the drawings) for moving the panel along a feed direction F parallel to the support plane S. The support plane S may be a horizontal plane, i.e. a plane which is parallel to a supporting surface, such as a floor, which supports the edge banding machine. The movement system may, for example, consist of a bottom movement chain which also acts as a support plane S for the panel (in addition to other supporting means in the case of large panels, for example), and a top presser, whose function is to hold the panel firmly in contact with the bottom movement chain. The bottom movement chain, by rotating, moves the panel along the feed direction F. The feed direction F may be parallel to the longitudinal axis of the edge banding machine, since edge banders typically are elongated in shape along the feed direction F. The edge banding machine may comprise, also, a gluing unit 100 for gluing the strip N to the panel, and a plurality of working units (not shown in the drawings), located downstream of the gluing unit 100 to perform a plurality of processes on the panel and/or on the strip N glued to the panel. In particular, the gluing unit 100 may comprise a glue roller 101 for spreading a glue on the strip N or on the panel N. The glue roller 101 may have a vertical axis Z. The vertical axis Z of the glue roller 101 may be perpendicular to the support plane S. The glue roller may rotate about the vertical axis Z. Furthermore, the glue roller 101 may be dipped in a tank of molten glue. As the glue roller 101 turns about the vertical axis Z, the molten glue from the tank is transferred onto it thanks to, for instance, the adhesiveness of the glue and the pumping effect of the knurling on the roller, presented on an outside surface of the glue roller 101. The glue thus transferred spreads over the outside surface of the glue roller 101, creating a layer of molten glue all round it. At this point, the panel (in particular, the rough edge thereof) and/or the strip N may be brought into contact with the layer of molten glue on the glue roller 101, so as to spread a quantity of glue on the panel and/or on the strip N. For this purpose, the glue roller 101 may be movable along a direction parallel to the support plane S and perpendicular to the vertical axis Z, towards or away from the panel, depending on whether the glue needs to be spread on the rough edge of the panel or on the back of the strip.

The gluing unit 100 may comprise a main presser 102 and/or a plurality of secondary pressers 103. Both have the purpose of pressing the strip N against the rough edge of the panel after the strip N and/or the panel have been spread with a quantity of glue. In particular, the main presser 102 may be used, for example, when the strip N has to be glued on a panel having a rough edge which is flat, while the plurality of secondary pressers 103 may be used, for example, when the strip N has to be glued on a panel having a rough edge which is contoured (soft-forming edge banding). In effect, the secondary pressers of the plurality of secondary pressers 103 may be disposed in such a way as to adapt to the contoured profile of the rough edge, so they can correctly press the strip N against the rough edge of the panel.

With reference in particular to the example shown in Figure 1, the gluing unit 100 of the edge banding machine according to the invention may comprise a main presser 102 and a plurality of secondary pressers 103, which may be activated jointly or exclusively, as required, depending on the desired type of gluing.

Furthermore, the gluing unit 100 may comprises a guide system 1 according to the invention, for guiding the strip N in proximity to the glue roller 101. Again with reference to the example shown in Figure 1, the guide system 1 may comprise a plurality of guides 11, 12, 13. In particular, the plurality of guides 11, 12, 13 may comprise a first guide 11. The first guide 11 may be configured to guide the strip N in proximity to the glue roller 101, in particular, a strip N which is thin, more specifically, a strip N whose thickness is less than or equal to 1 mm. For example, the first guide 11 may have the shape of a comb, with the teeth of the comb disposed parallel to each other along a direction which is, for example, parallel to the vertical axis Z. The first guide 11 may be made, for example, of harmonic steel. Furthermore, the plurality of guides 11, 12, 13 may comprise a second guide 12. The second guide 12 may be configured to guide the strip N in proximity to the glue roller 101 in such a way as to prevent it from coming into contact with the glue present on the glue roller 101. For example, the second guide 12 may comprise two elements which are, for example, plate-shaped. These plate-shaped elements may extend, for example, along a direction parallel to the vertical axis Z and may be disposed in such a way as to be spaced from each other along an axis perpendicular to the vertical axis Z so that the strip N can move between the two plate-shaped elements. Additionally, the plurality of guides 11, 12, 13 may comprise a third guide 13. The third guide 13 may be configured to guide the strip N in proximity to the glue roller 101, in particular, a strip N, which is thick, more specifically, a strip N whose thickness is greater than 1 mm. For example, the third guide 13 may be roller-shaped, with a longitudinal axis parallel to the vertical axis Z. The third guide 13 may be free to rotate about its longitudinal axis, i.e. it may be an idle roller.

The plurality of guides 11, 12, 13 may be movable, for example, between a start position and an end position, in particular between a start position, an intermediate position and an end position.

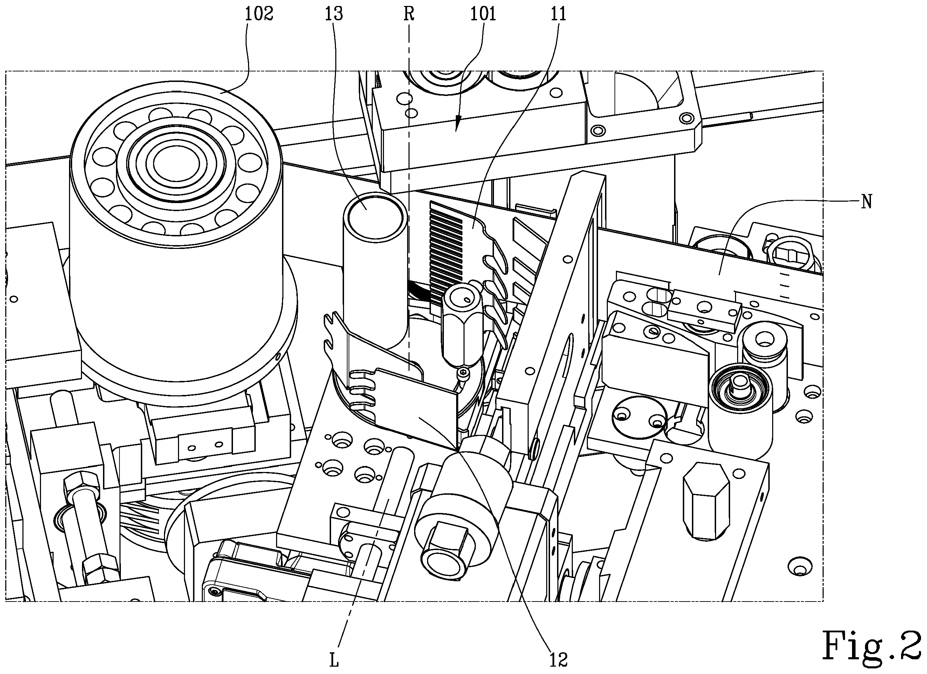

For example, Figure 2 shows the plurality of guides 11, 12, 13 at the start position. At the start position, the first guide 11 may be positioned in proximity to the glue roller 101 so as to guide the strip in proximity to the glue roller 101 so that the strip N moves into contact with the layer of glue present on the outside surface of the glue roller 101.

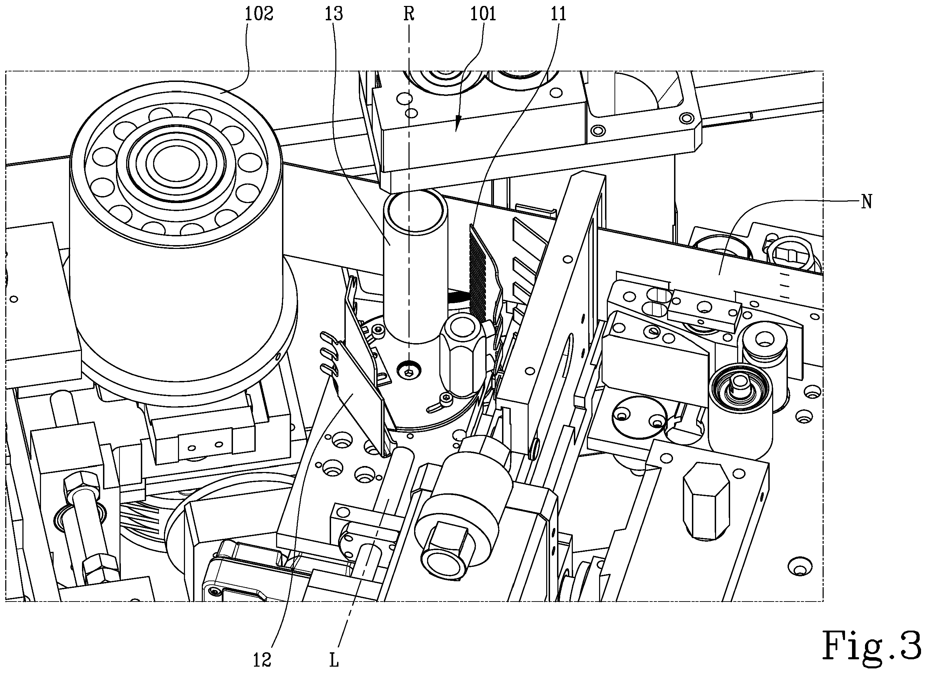

For example, Figure 3 shows the plurality of guides 11, 12, 13 at the intermediate position. At the intermediate position, the third guide 13 may be positioned in proximity to the glue roller 101 so as to guide the strip in proximity to the glue roller 101 so that the strip N moves into contact with the layer of glue present on the outside surface of the glue roller 101.

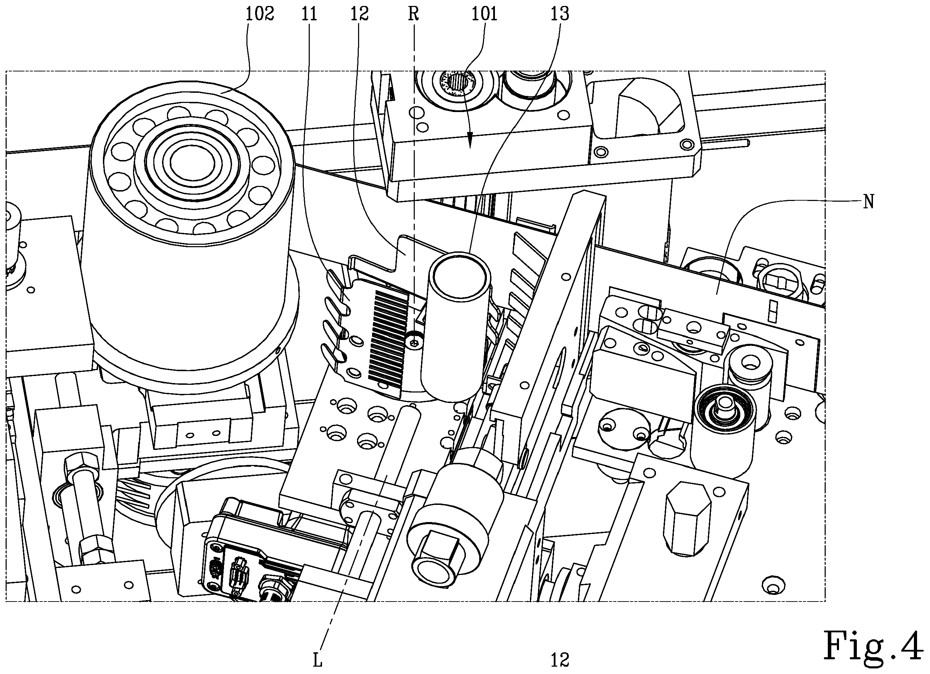

For example, Figure 4 shows the plurality of guides 11, 12, 13 at the end position. At the end position, the second guide 12 may be positioned in proximity to the glue roller 101 so as to guide the strip in proximity to the glue roller 101 so that the strip N moves into contact with the layer of glue present on the outside surface of the glue roller 101 .

The plurality of guides 11, 12, 13 might also comprise other guides in addition to the ones described herein, for example, guides having different shapes and functions, to be used in different machining processes, and thus, the plurality of guides 11, 12, 13 might have additional positions where a respective guide is located in proximity to the glue roller 101.

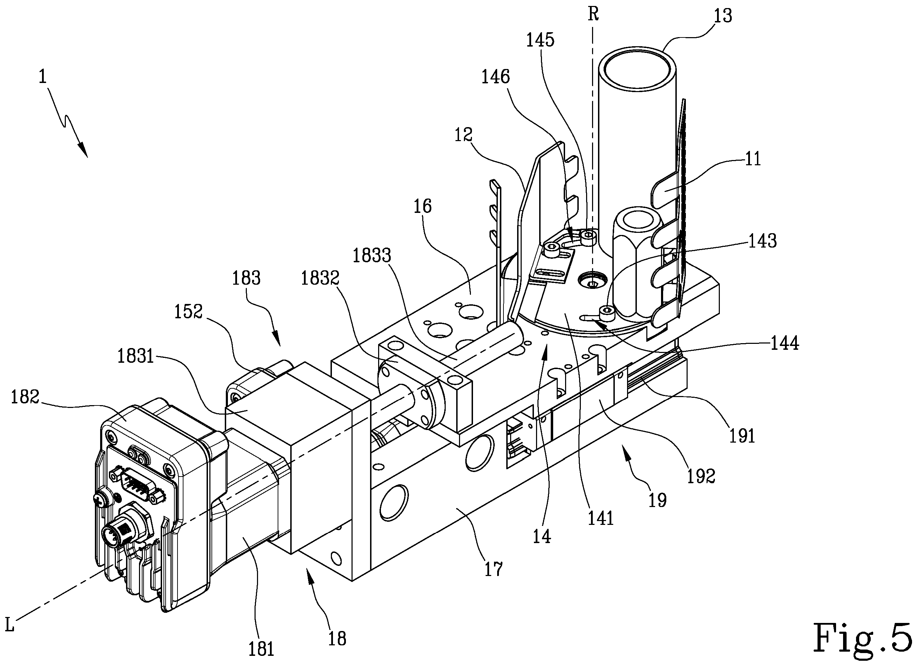

With reference in particular to Figure 5, the guide system 1 may comprise a circular support 14. The circular support 14 may, for example, have the shape of a disc. In particular, the circular support 14 may have a first circular face 141 and a second circular face 142, opposite the first circular face 141. The first guide 11, the second guide 12 and the third guide 13 of the plurality of guides 11, 12, 13 may be coupled to the first circular face 141, in particular removably, for example by means of screw elements or other fastening elements. Furthermore, the first guide 11, the second guide 12 and the third guide 13 of the plurality of guides 11, 12, 13 may be disposed round the circumference of the first circular face 141. The circular support 14 may be rotatable about a main rotation axis R. The main rotation axis R may, for example, be parallel to the vertical axis Z. Thanks to the rotation of the circular support 14 about the main rotation axis R, for example anticlockwise, the plurality of guides 11, 12, 13 passes from the start position to the end position, and vice versa. In particular, thanks to the rotation of the circular support 14 about the main rotation axis R, for example anticlockwise, the plurality of guides 11, 12, 13 passes from the start position to the intermediate position, and from the intermediate position to the end position, and vice versa. In particular, the circular support may rotate, for example through an angle of 240°, starting from the start position, passing through the intermediate position and arriving at the end position, and vice versa. The rotation of the circular support 14 makes it possible for the first guide 11, the second guide 12 and the third guide 13 to alternate their positions in proximity to the glue roller 101 so as to respectively guide the strip N in proximity to the glue roller 101.

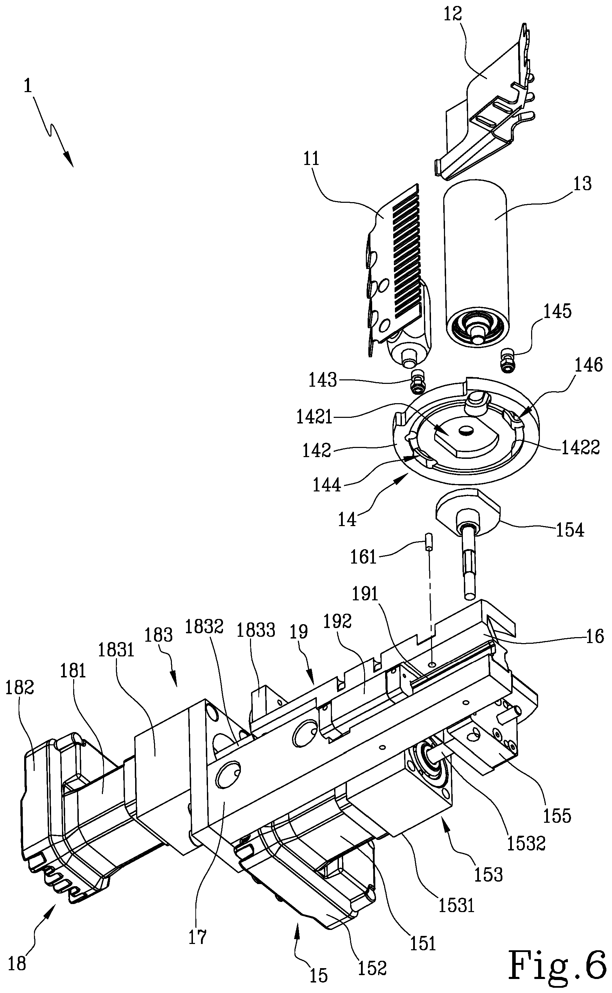

With reference in particular to Figure 6, the guide system 1 may comprise a first actuator 15, configured to rotate the circular support 14 about the main rotation axis R. For example, the first actuator 15 may comprise a first electric motor 151, a first driver 152 to control the first electric motor 151 and a first motion transmission system 153 coupled to the first electric motor 151. The first motion transmission system 153 may comprise a first bearing support 1531, coupled to the first electric motor 151. Furthermore, the first motion transmission system 153 may comprise a drive shaft 1532 coming out of the first bearing support 1531, an angular transmission mechanism 155 and a driven shaft 154. The driven shaft 154 may have a rotation axis that is coaxial with the main rotation axis R of the circular support 14. The presence of the angular transmission mechanism 155 means that the drive shaft 1532 can be perpendicular to the driven shaft 154, making the guide system 1 advantageously compact. In particular, the angular transmission mechanism 155 may also act as a reduction gear unit and can be chosen, for example, from the types of reduction gears units that do not allow retrograde motion, so it is not necessary to use a brake or to keep the first electric motor 151 in an engaged condition to hold the circular support 14 in place once it has been brought to the desired position. The first motion transmission system 153 may be coupled to the circular support 14 by a shape coupling. In particular, as shown in the example of Figure 6, the shape coupling is configured in such a way as to allow a limited number of possible radial orientations between the circular support 14 and the first motion transmission system 153, in particular only two possible orientations. For example, a coupling known as male-female or solid-hollow coupling may be used. The end of the driven shaft 154 may have a special shape, so as to act as a male or solid element, while the second circular face 142 may be provided with a recess 1421 having the same special shape as the driven shaft 154 but in negative, so as to act as female or hollow element. In the example shown in Figure 6, the male-female coupling has a semicircular shape, with two planar faces so that only two radial orientations are possible when the circular support 14 and the first motion transmission means 153 are coupled.

With reference in particular to Figure 5, the guide system 1 may comprise a main support 16. The circular support 14 may be coupled to the main support 16 rotatably about the main rotation axis R. In particular, the second circular face 142 may be in contact with the main support 16 in a contact zone. In order to reduce friction, hence wear, the main support 16 and/or the second circular face 142 may have a low friction coefficient in the contact zone, obtained, for example, by a surface treatment or by gluing a material with a low friction coefficient. The surface treatment may be a coating with a product having a low friction coefficient.

The main support 16 may comprise a main stop 161. The main stop 161 may be pin-shaped or cylindrical. With reference to Figure 6, the main stop 161 may be located in the contact zone. The second circular face 142 may be provided with a circular slot 1422 configured so that when the circular support 14 rotates about the main rotation axis, the main stop 161 can move inside and along the circular slot 1422 relative to the circular support 14. Additionally, the circular support 14 comprises a first adjustable stop 143 configured to interfere with the main stop 161 when the plurality of guides 11, 12, 13 is at the start position. In particular, the first adjustable stop 143 may be a screw protruding into the circular slot 1422. More specifically, the position of the first adjustable stop 143 along the circular slot 1422 may be varied by means of a first slot 144 so as to adjust its position and thus to adjust the start position of the plurality of guides 11, 12, 13. Furthermore, the circular support 14 comprises a second adjustable stop 145 configured to interfere with the main stop 161 when the plurality of guides 11, 12, 13 is at the end position. In particular, the second adjustable stop 145 may be a screw protruding into the circular slot 1422. More specifically, the position of the second adjustable stop 145 along the circular slot 1422 may be varied by means of a second slot 146 so as to adjust its position and thus to adjust the end position of the plurality of guides 11, 12, 13.

With reference in particular to Figures 5 and 6, the guide system 1 may comprise a secondary support 17 configured to be coupled to a base B of the edge banding machine. In particular, the main support 16 is coupled to the secondary support 17 movably along a transverse axis L, towards and away from the glue roller 101. The transverse axis L may be parallel to the support plane S. Furthermore, the transverse axis L may be perpendicular or inclined to the feed direction F. Furthermore, the guide system 1 may comprise a second actuator 18, configured to move the main support 16 along the transverse axis L relative to the secondary support 17. The second actuator 18 may, for example, comprise a second electric motor 181, a second driver 182 to control the second electric motor 181 and a second motion transmission system 183 coupled to the second electric motor 181. The second motion transmission system 183 may comprise a second bearing support 1831, coupled to the second electric motor 181, an endless screw 1833 and a lead nut 1832 to convert the rotational motion of the second electric motor 181 into linear motion.

Additionally, the guide system 1 may, for example, comprise a guide system 19 for guiding the motion of the main support 16 along the transverse axis L. The guide system 19 may, for example, comprise a linear guide 191 and a shoe 192.

## Claims

1. A guide system (1) for guiding a strip (N) in proximity to a glue roller (101) configured to spread glue on the strip (N) or on a panel, the guide system (1) comprising a plurality of guides (11, 12, 13), wherein the plurality of guides (11, 12, 13) is movable between a start position, where a first guide (11) of the plurality of guides (11, 12, 13) is configured to be positioned in proximity to the glue roller (101) so as to guide the strip (N) in proximity to the glue roller (101), and an end position, where a second guide (12) of the plurality of guides (11, 12, 13) is configured to be positioned in proximity to the glue roller (101) so as to guide the strip (N) in proximity to the glue roller (101), and wherein the guide system (1) comprises a circular support (14), the circular support (14) having a first circular face (141) and a second circular face (142), opposite the first circular face (141), wherein the plurality of guides (11, 12, 13) is coupled to the circular support (14) on the first circular face (141), and wherein the circular support (14) is movable in such a way that the plurality of guides (11, 12, 13) passes from the start position to the end position, and vice versa, by the effect of the movement of the circular support (14).

2. The guide system (1) according to claim 1, wherein the circular support (14) is rotatable about a main rotation axis (R) perpendicular to the first circular face (141), and wherein the plurality of guides (11, 12, 13) passes from the start position to the end position, and vice versa, by the effect of the rotation of the circular support (14) about the main rotation axis (R).

3. The guide system (1) according to claim 2, comprising a first actuator (15), configured to rotate the circular support (14) about the main rotation axis (R), the first actuator (15) comprising a first motion transmission system (153) configured to transmit the motion of the first actuator (15) to the circular support (14), the circular support (14) being removably coupled to the first motion transmission system (153) by a shape coupling, wherein the shape coupling is configured to allow only one radial orientation between the circular support (14) and the first motion transmission system (153).

4. The guide system (1) according to claim 3, wherein the first motion transmission system (153) does not allow retrograde motion.

5. The guide system (1) according to any one of claims 2 to 4, comprising a main support (16), wherein the circular support (14) is coupled to the main support (16) rotatably about the main rotation axis (R), wherein the second circular face (142) is in contact with the main support (16) in a contact zone, and wherein the main support (16) and/or the second circular face (142) have a low friction coefficient in the contact zone.

6. The guide system (1) according to any one of claims 1 to 5, comprising a main support (16), the main support (16) comprising a main stop (161), wherein the circular support (14) comprises a first adjustable stop (143) configured to interfere with the main stop (161) when the plurality of guides (11, 12, 13) is at the start position.

7. The guide system (1) according to claim 6, wherein the circular support (14) comprises a second adjustable stop (145) configured to interfere with the main stop (161) when the plurality of guides (11, 12, 13) is at the end position.

8. The guide system (1) according to any one of claims 5 to 7, comprising a secondary support (17) configured to be coupled to an edge banding machine, wherein the main support (16) is movable along a transverse axis (L) relative to the secondary support (17) towards and away from the glue roller (101).

9. The guide system (1) according to any one of the preceding claims, wherein the plurality of guides (11, 12, 13) is movable between the start position, where the first guide (11) of the plurality of guides (11, 12, 13) is configured to be positioned in proximity to the glue roller (101) so as to guide the strip (N) in proximity to the glue roller (101), an intermediate position, where a third guide (13) of the plurality of guides (11, 12, 13) is configured to be positioned in proximity to the glue roller (101) so as to guide the strip (N) in proximity to the glue roller (101), and an end position, where the second guide (12) of the plurality of guides (11, 12, 13) is configured to be positioned in proximity to the glue roller (101) so as to guide the strip (N) in proximity to the glue roller (101).

10. An edge banding machine for gluing a strip (N) to a panel, comprising:
- a support plane (S), for supporting the panel;
- a movement system for moving the panel along a feed direction (F) which is parallel to the support plane (S);
- a gluing unit (100) for gluing the strip (N) to the panel; and
- a plurality of working units, located downstream of the gluing unit (100) to perform a plurality of processes on the panel and/or on the strip (N) glued to the panel,
wherein the gluing unit (100) comprises:
- a glue roller (101) for spreading a glue on the strip (N) or on the panel; and
- a guide system (1) according to any one of the preceding claims, for guiding the strip (N) in proximity to the glue roller (101).

## Patentansprüche

1. Führungssystem (1) zum Führen eines Streifens (N) in der Nähe einer Leimwalze (101), die so ausgelegt ist, dass sie Leim auf den Streifen (N) oder auf eine Platte aufträgt, wobei das Führungssystem (1) eine Vielzahl von Führungen (11, 12, 13) umfasst, wobei die Vielzahl von Führungen (11, 12, 13) zwischen einer Startposition, in der eine erste Führung (11) der Vielzahl von Führungen (11, 12, 13) so ausgelegt ist, dass sie in der Nähe der Leimwalze (101) positioniert wird, um den Streifen (N) in der Nähe der Leimwalze (101) zu führen, und einer Endposition beweglich ist, in der eine zweite Führung (12) der Vielzahl von Führungen (11, 12, 13) so ausgelegt ist, dass sie in der Nähe der Leimwalze (101) positioniert wird, um den Streifen (N) in der Nähe der Leimwalze (101) zu führen, und wobei das Führungssystem (1) einen kreisförmigen Träger (14) umfasst, wobei der kreisförmige Träger (14) eine erste kreisförmige Fläche (141) und eine zweite kreisförmige Fläche (142) aufweist, die der ersten kreisförmigen Fläche (141) gegenüberliegt, wobei die Vielzahl von Führungen (11, 12, 13) mit dem kreisförmigen Träger (14) auf der ersten kreisförmigen Fläche (141) gekoppelt ist, und wobei der kreisförmige Träger (14) so beweglich ist, dass die Vielzahl von Führungen (11, 12, 13) durch die Wirkung der Bewegung des kreisförmigen Trägers (14) von der Startposition in die Endposition und umgekehrt übergeht.

2. Führungssystem (1) nach Anspruch 1, wobei der kreisförmige Träger (14) um eine Hauptdrehachse (R) drehbar ist, die senkrecht zur ersten kreisförmigen Fläche (141) verläuft, und wobei die Vielzahl von Führungen (11, 12, 13) durch die Wirkung der Drehung des kreisförmigen Trägers (14) um die Hauptdrehachse (R) von der Startposition in die Endposition und umgekehrt übergeht.

3. Führungssystem (1) nach Anspruch 2, umfassend einen ersten Aktuator (15), der so ausgelegt ist, dass er den kreisförmigen Träger (14) um die Hauptdrehachse (R) dreht, wobei der erste Aktuator (15) ein erstes Bewegungsübertragungssystem (153) umfasst, das so ausgelegt ist, dass es die Bewegung des ersten Aktuators (15) auf den kreisförmigen Träger (14) überträgt, wobei der kreisförmige Träger (14) durch eine Formkupplung abnehmbar mit dem ersten Bewegungsübertragungssystem (153) gekoppelt ist, wobei die Formkupplung so ausgelegt ist, dass sie nur eine radiale Ausrichtung zwischen dem kreisförmigen Träger (14) und dem ersten Bewegungsübertragungssystem (153) zulässt.

4. Führungssystem (1) nach Anspruch 3, wobei das erste Bewegungsübertragungssystem (153) keine Rückwärtsbewegung zulässt.

5. Führungssystem (1) nach einem der Ansprüche 2 bis 4, umfassend einen Hauptträger (16), wobei der kreisförmige Träger (14) um die Hauptdrehachse (R) drehbar mit dem Hauptträger (16) gekoppelt ist, wobei die zweite kreisförmige Fläche (142) in einer Kontaktzone mit dem Hauptträger (16) in Kontakt steht, und wobei der Hauptträger (16) und/oder die zweite kreisförmige Fläche (142) in der Kontaktzone einen niedrigen Reibungskoeffizienten aufweisen.

6. Führungssystem (1) nach einem der Ansprüche 1 bis 5, umfassend einen Hauptträger (16), wobei der Hauptträger (16) einen Hauptanschlag (161) umfasst, wobei der kreisförmige Träger (14) einen ersten einstellbaren Anschlag (143) umfasst, der so ausgelegt ist, dass er mit dem Hauptanschlag (161) interferiert, wenn sich die Vielzahl von Führungen (11, 12, 13) in der Startposition befindet.

7. Führungssystem (1) nach Anspruch 6, wobei der kreisförmige Träger (14) einen zweiten einstellbaren Anschlag (145) umfasst, der so ausgelegt ist, dass er mit dem Hauptanschlag (161) interferiert, wenn sich die Vielzahl von Führungen (11, 12, 13) in der Endposition befindet.

8. Führungssystem (1) nach einem der Ansprüche 5 bis 7, umfassend einen Sekundärträger (17), der so ausgelegt ist, dass er mit einer Kantenanleimmaschine gekoppelt werden kann, wobei der Hauptträger (16) entlang einer Querachse (L) relativ zum Sekundärträger (17) zur Leimwalze (101) hinführend und von dieser wegführend bewegbar ist.

9. Führungssystem (1) nach einem der vorhergehenden Ansprüche, wobei die Vielzahl von Führungen (11, 12, 13) zwischen der Startposition, in der die erste Führung (11) der Vielzahl von Führungen (11, 12, 13) so ausgelegt ist, dass sie in der Nähe der Leimwalze (101) positioniert wird, um den Streifen (N) in der Nähe der Leimwalze (101) zu führen, einer Zwischenposition, in der eine dritte Führung (13) der Vielzahl von Führungen (11, 12, 13) so ausgelegt ist, dass sie in der Nähe der Leimwalze (101) positioniert wird, um den Streifen (N) in der Nähe der Leimwalze (101) zu führen, und einer Endposition beweglich ist, in der die zweite Führung (12) der Vielzahl von Führungen (11, 12, 13) so ausgelegt ist, dass sie in der Nähe der Leimwalze (101) positioniert wird, um den Streifen (N) in der Nähe der Leimwalze (101) zu führen.

10. Kantenanleimmaschine zum Ankleben eines Streifens (N) an eine Platte, umfassend:
- eine Tragebene (S) zum Tragen der Platte;
- ein Bewegungssystem zum Bewegen der Platte entlang einer Vorschubrichtung (F), die parallel zur Tragebene (S) verläuft;
- eine Klebeeinheit (100) zum Ankleben des Streifens (N) an die Platte; und
- eine Vielzahl von Arbeitseinheiten, die sich stromabwärts der Klebeeinheit (100) befinden, um eine Vielzahl von Prozessen an der Platte und/oder an dem an die Platte geklebten Streifen (N) durchzuführen,
wobei die Klebeeinheit (100) Folgendes umfasst:
- eine Leimwalze (101) zum Verteilen eines Leims auf dem Streifen (N) oder auf der Platte; und
- ein Führungssystem (1) nach einem der vorhergehenden Ansprüche zum Führen des Streifens (N) in der Nähe der Leimwalze (101).

## Revendications

1. Système de guidage (1) destiné à guider une bande (N) à proximité d'un rouleau encolleur (101) configuré pour étaler de la colle sur la bande (N) ou sur un panneau, le système de guidage (1) comprenant une pluralité de guides (11, 12, 13), dans lequel la pluralité de guides (11, 12, 13) est mobile entre une position de départ, où un premier guide (11) de la pluralité de guides (11, 12, 13) est configuré pour être positionné à proximité du rouleau encolleur (101) de manière à guider la bande (N) à proximité du rouleau encolleur (101), et une position d'extrémité, où un deuxième guide (12) de la pluralité de guides (11, 12, 13) est configuré pour être positionné à proximité du rouleau encolleur (101) de manière à guider la bande (N) à proximité du rouleau encolleur (101), et dans lequel le système de guidage (1) comprend un support circulaire (14), le support circulaire (14) comportant une première face circulaire (141) et une seconde face circulaire (142), opposée à la première face circulaire (141), dans lequel la pluralité de guides (11, 12, 13) est couplée au support circulaire (14) sur la première face circulaire (141), et dans lequel le support circulaire (14) est mobile de telle sorte que la pluralité de guides (11, 12, 13) passe de la position de départ à la position d'extrémité, et vice versa, sous l'effet du déplacement du support circulaire (14).

2. Système de guidage (1) selon la revendication 1, dans lequel le support circulaire (14) peut tourner autour d'un axe de rotation principal (R) perpendiculaire à la première face circulaire (141), et dans lequel la pluralité de guides (11, 12, 13) passe de la position de départ à la position d'extrémité, et vice versa, sous l'effet de la rotation du support circulaire (14) autour de l'axe de rotation principal (R).

3. Système de guidage (1) selon la revendication 2, comprenant un premier actionneur (15) configuré pour faire tourner le support circulaire (14) autour de l'axe de rotation principal (R), le premier actionneur (15) comprenant un premier système de transmission de mouvement (153) configuré pour transmettre le mouvement du premier actionneur (15) au support circulaire (14), le support circulaire (14) étant couplé de manière amovible au premier système de transmission de mouvement (153) par un couplage de forme, dans lequel le couplage de forme est configuré pour ne permettre qu'une seule orientation radiale entre le support circulaire (14) et le premier système de transmission de mouvement (153).

4. Système de guidage (1) selon la revendication 3, dans lequel le premier système de transmission de mouvement (153) ne permet pas de mouvement rétrograde.

5. Système de guidage (1) selon l'une quelconque des revendications 2 à 4, comprenant un support principal (16), dans lequel le support circulaire (14) est couplé au support principal (16) de manière à pouvoir tourner autour de l'axe de rotation principal (R), dans lequel la seconde face circulaire (142) est en contact avec le support principal (16) dans une zone de contact, et dans lequel le support principal (16) et/ou la seconde face circulaire (142) présentent un faible coefficient de frottement dans la zone de contact.

6. Système de guidage (1) selon l'une quelconque des revendications 1 à 5, comprenant un support principal (16), le support principal (16) comprenant une butée principale (161), dans lequel le support circulaire (14) comprend une première butée réglable (143) configurée pour interférer avec la butée principale (161) lorsque la pluralité de guides (11, 12, 13) se trouve en position de départ.

7. Système de guidage (1) selon la revendication 6, dans lequel le support circulaire (14) comprend une seconde butée réglable (145) configurée pour interférer avec la butée principale (161) lorsque la pluralité de guides (11, 12, 13) se trouve en position d'extrémité.

8. Système de guidage (1) selon l'une quelconque des revendications 5 à 7, comprenant un support secondaire (17) configuré pour être couplé à une machine de cerclage de bord, dans lequel le support principal (16) est mobile le long d'un axe transversal (L) par rapport au support secondaire (17), en s'approchant et en s'éloignant du rouleau encolleur (101).

9. Système de guidage (1) selon l'une quelconque des revendications précédentes, dans lequel la pluralité de guides (11, 12, 13) est mobile entre la position de départ, où le premier guide (11) de la pluralité de guides (11, 12, 13) est configuré pour être positionné à proximité du rouleau encolleur (101) de manière à guider la bande (N) à proximité du rouleau encolleur (101), une position intermédiaire, où un troisième guide (13) de la pluralité de guides (11, 12, 13) est configuré pour être positionné à proximité du rouleau encolleur (101) de manière à guider la bande (N) à proximité du rouleau encolleur (101), et une position d'extrémité, où le deuxième guide (12) de la pluralité de guides (11, 12, 13) est configuré pour être positionné à proximité du rouleau encolleur (101) de manière à guider la bande (N) à proximité du rouleau encolleur (101).

10. Machine de cerclage de bord destinée à coller une bande (N) sur un panneau, comprenant :
- un plan de support (S), destiné à supporter le panneau ;
- un système de déplacement destiné à déplacer le panneau le long d'une direction d'alimentation (F) qui est parallèle au plan de support (S) ;
- une unité d'encollage (100) destinée à encoller la bande (N) sur le panneau ; et
- une pluralité d'unités de travail, situées en aval de l'unité d'encollage (100) pour effectuer une pluralité de traitements sur le panneau et/ou sur la bande (N) collés sur le panneau,
dans laquelle l'unité d'encollage (100) comprend :
- un rouleau encolleur (101) destiné à étaler de la colle sur la bande (N) ou sur le panneau ; et
- un système de guidage (1) selon l'une quelconque des revendications précédentes, destiné à guider la bande (N) à proximité du rouleau encolleur (101).
